# EUROPEAN PATENT APPLICATION

(11) **EP 4 674 808 A1**
(43) Date of publication of application: **07.01.2026**
(21) Application number: 24763667.3
(22) Date of filing: 16.02.2024
(51) Int. Cl.: C01B 13/10

(54) **OZONE GAS SUPPLY SYSTEM**

(30) Priority: 27.02.2023 JP 2023027885
(71) Applicant: Meiden Nanoprocess Innovations, Inc., Tokyo 141-0032 (JP)
(72) Inventor: NISHIGUCHI, Tetsuya, Tokyo 141-0032 (JP); MORIKAWA, Yoshiki, Tokyo 141-0032 (JP); YAMASHITA, Hiroaki, Tokyo 141-0032 (JP); MATSUMOTO, Naoshi, Tokyo 141-0032 (JP); FUKATSU, Ayaka, Tokyo 141-0032 (JP)
(74) Representative: Manitz Finsterwald Patent- und Rechtsanwaltspartnerschaft mbB
(86) International application number: PCT/JP2024/005604
(87) International publication number: WO 2024/181184

(57) **Abstract**

An ozone gas supply system 1 is provided with an ozone gas supply device 2, a gas introduction line 3 and a mass flow controller MFC1. The ozone gas supply device 2 can generate and supply ozone gas with an ozone concentration of 80% by volume or greater by low-temperature fractional distillation of ozone gas obtained in an ozonator 32. The gas introduction line 3 introduces ozone gas from the ozonator 32 to the ozone gas supply device 2 such that a dilution gas can be introduced into the ozonator 32. The mass flow controller MFC1can adjust the ozone concentration of the ozone gas in the ozone gas supply device 2 by controlling the flow rate of the dilution gas in the gas introduction line 3.

## Description

### TECHNICAL FIELD

The present invention relates to a technology for rapidly and reproducibly changing the ozone concentration to an arbitrary ozone concentration or instantly increasing the ozone partial pressure, in a gas supply system for obtaining high-concentration ozone gas with an ozone concentration of 80% by volume or greater (hereinafter, "% by volume" is referred to as "%"; the same applies in the drawings) by low-temperature fractionation distillation.

### BACKGROUND TECHNOLOGY

From the perspective of improving ozone gas reaction efficiency and reducing gas costs, processes using high-concentration ozone gas with higher ozone concentrations than those obtained from conventional discharge-type ozonators have begun to be widely used (non-patent document 1, patent documents 1 and 2). For example, by increasing the ozone concentration from 210 g/Nm³ to 1,600 g/Nm³, the cost of oxygen gas has been reduced to one-eighth of the conventional level, thereby enabling a 70% reduction in the operating costs of ultra-high-concentration ozone production systems for water treatment compared to conventional systems.

On the other hand, considering the manufacturing and operating costs of high-concentration ozone gas, it is desirable to keep the flow rate and concentration to the minimum necessary for treatment targets.

As a method for generating high-concentration ozone gas, an ozone concentration method can be cited which uses the selective adsorption performance of silica gel with respect to polar molecules. This method can adsorb and concentrate only highly polar ozone molecules from an ozone-oxygen mixture gas with an ozone concentration of about 10% obtained by a conventional discharge method, and it is used in fields such as water treatment (general industry) and semiconductor processes.

The above ozone concentration method can concentrate ozone to have an ozone concentration of 30% or greater by controlling the pressure after the adsorption (vacuum pressure desorption treatment) to remove oxygen molecules with weak adsorption forces. However, by controlling the time for the desorption treatment, the concentration can be varied from 30% to a maximum of 80%.

Furthermore, by equipping three adsorption/desorption vessels and shifting the timing of adsorption, desorption (concentration), and the like in time, it is possible to continuously supply ozone gas with an ozone concentration suitable for the treatment target.

### PRIOR ART DOCUMENT(S)

### NON-PATENT DOCUMENT(S)

Non patent document 1: 2017, No. 12, Vol. 91 Mitsubishi Electric Technical Report

### PATENT DOCUMENT(S)

Patent Document 1: United States Patent No. 11123679
Patent Document 2: United States Patent No. 8409520

### SUMMARY OF THE INVENTION

The above ozone concentration method cannot be applied to semiconductor processes requiring high-purity ozone gas because, even when using high-purity silica gel, metal impurities (Cu, Mg, Ni, Fe, Zn, and the like) contained in the silica gel cannot be completely removed at the ppb level. In addition, after concentrating ozone gas to a predetermined concentration in each vessel, it is impossible to control the ozone concentration until the gas in the vessel is completely depleted (until complete desorption occurs).

Furthermore, since the supply of ozone gas is performed by a mass flow controller after being compressed by a pump in a supply line, the ozone concentration decreases to 10-20% during the compression and flow rate control processes when the gas flow rate is low.

Therefore, in the process in which the flow rate is relatively low (for example, tens to hundreds of cc (cm³)/min or less) in vacuum (reduced pressure) environments for semiconductor processes and the like, the above-mentioned ozone supply method is unsuitable.

The present invention is made into consideration of such a technical problem, and an object of the present invention is to provide an ozone gas supply system capable of supplying ozone gas to an ozone utilization system with variable ozone concentration using a minimal device configuration.

In one aspect of the present invention, an ozone gas supply system includes: an ozone gas supply device that generates ozone gas with an ozone concentration of 80% by volume or greater by low-temperature fractional distillation of ozone gas obtained in an ozonator, and supplies it; a gas introduction line that introduces the ozone gas from the ozonator to the zone gas supply device such that a dilution gas can be introduced into the ozonator; and a first mass flow controller that can adjust an ozone concentration of the ozone gas in the ozone gas supply device by controlling a flow rate of the dilution gas of the gas introduction line.

In one aspect of the present invention, the ozone gas supply system includes: a gas supply line that supplies the ozone gas from the ozone gas supply device to a process equipment; a gas exhaust line that exhausts the ozone gas from the ozone gas supply device; and a bypass line that can exhaust residual gas of the gas introduction line to the gas exhaust line immediately before supplying the ozone gas from the ozone gas supply device to the gas supply line.

In one aspect of the present invention, the ozone gas supply system further includes: a dilution gas introduction line that can introduce the dilution gas into the gas introduction line; and a second mass flow controller that can adjust the ozone concentration of the ozone gas in the ozone gas supply device by controlling the flow rate of the dilution gas in the dilution gas introduction line.

In the ozone gas supply system in one aspect of the present invention, a gas supply line is provided that supplies the ozone gas from the ozone gas supply device to a process equipment, the dilution gas introduction line is provided with a dilution gas supply valve, the gas supply line is provided with an ozone gas supply valve, and the dilution gas supply valve can be opened and closed in synchronization with the ozone gas supply valve.

In one aspect of the present invention, the ozone gas supply system includes a gas recovery line that can return, to the gas supply line, part of the ozone gas to be supplied from the ozone gas supply device to the process equipment.

In the ozone gas supply system in one aspect of the present invention, a plurality of the ozone gas supply devices are provided, and while one of the ozone gas supply devices accumulates liquid ozone, the other of the ozone gas supply devices supplies the ozone gas.

In the ozone gas supply system in one aspect of the present invention, a control unit is provided that is configured to control the flow rate of the dilution gas and a temperature of a vessel of the ozone gas supply device that stores liquid ozone generated by the low-temperature fractional distillation, based on a relationship between the flow rate of the dilution gas, the temperature of the vessel, and the ozone concentration of the ozone gas generated by the low-temperature fractional distillation and a relationship between the flow rate of the dilution gas and a pressure of the vessel.

In the ozone gas supply system in one aspect of the present invention, the flow rate of the dilution gas and the temperature of the vessel are independently controlled.

In the ozone gas supply system in one aspect of the present invention, the control unit is configured to control a supply pressure of the ozone gas and the ozone gas concentration of the ozone gas supply device by changing the flow rate or a type of the dilution gas while maintaining the temperature of the vessel constant.

In the ozone gas supply system in one aspect of the present invention, the dilution gas is a gas that has a higher vapor pressure than the ozone gas and does not react with the ozone gas.

In the ozone gas supply system in one aspect of the present invention, a gas exhaust line that exhausts the ozone gas from the ozone gas supply device is provided, and the gas recovery line can supply the part of the ozone gas to be supplied to the processing equipment to the gas exhaust line connected to the gas supply line.

In the ozone gas supply system in one aspect of the present invention, the dilution gas introduction line introduces the dilution gas to the gas introduction line through a heat exchanger.

In the ozone gas supply system in one aspect of the present invention, the heat exchanger controls a supply pressure of the ozone gas and the ozone gas concentration by changing a temperature of the dilution gas.

As the above, according to the present invention, it is possible to provide an ozone gas supply system capable of supplying ozone gas to an ozone utilization system with variable ozone concentration using a minimal device configuration.

### BRIEF DESCRIPTION OF THE DRAWINGS

FIG. 1 is a schematic diagram of an ozone gas supply system in an embodiment 1 of the present invention.
FIG. 2 shows an example of the operation of valves and a mass flow controller in the embodiment 1.
FIG. 3 is a schematic diagram of the ozone gas supply system in an embodiment 2 of the present invention.
FIG. 4 shows an example of the operation of valves and mass flow controllers in an embodiment 2.
FIG. 5 is a relationship diagram between a dilution gas flow rate, vessel temperature, and ozone concentration inside a vessel.
FIG. 6 is a schematic diagram of the ozone gas supply system that is another aspect of the embodiment 2.
FIG. 7 is a schematic diagram of the ozone gas supply system in an embodiment 3 of the present invention.
FIG. 8 is an example of the operation of valves and mass flow controllers in the embodiment 3.
FIG. 9 is a relationship diagram in a control value between a dilution gas flow rate and a supply pressure, a supply ozone gas concentration and an ozone gas flow rate of the embodiment 3.
FIG. 10 is a schematic diagram of the ozone gas supply system in an embodiment 4 of the present invention.
FIG. 11 is an example of the operation of valves and mass flow controllers in the embodiment 4.
FIG. 12 is a schematic diagram of the ozone gas supply system that is another aspect of the embodiment 4.

### MODE FOR IMPLEMENTING THE INVENTION

In the following, embodiments of the present invention will be explained by referring to the drawings.

### [Embodiment 1]

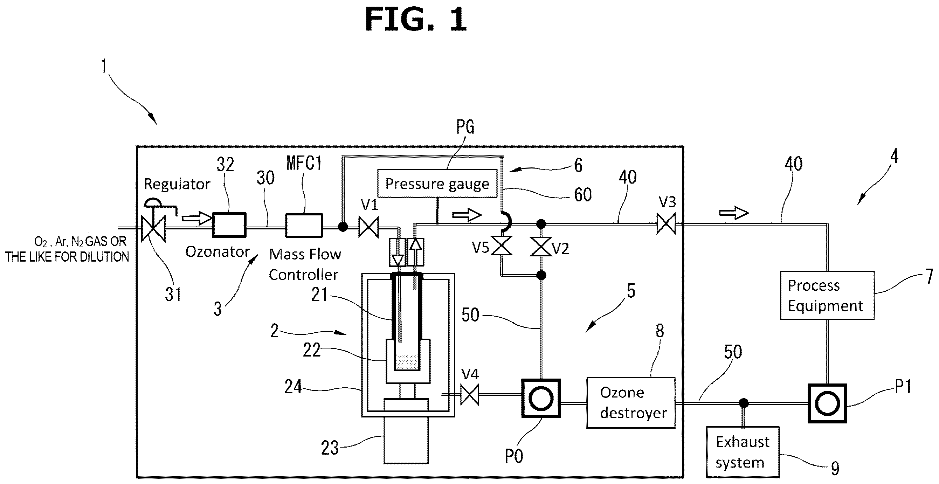

An ozone gas supply system 1 of an embodiment 1 of the present invention shown in FIG. 1 supplies high-concentration ozone gas with an ozone concentration of 80% or greater, which is concentrated by low-temperature fractional distillation of low-concentration ozone gas obtained, for example, by discharge, in real time with variable ozone concentration. The low-temperature fractional distillation is a method of separating and storing liquid or gas ozone by using the difference in vapor pressure between ozone and oxygen.

The ozone gas supply system 1 is provided with an ozone gas supply device 2, a gas introduction line 3, a gas supply line 4, a gas exhaust line 5, and a bypass line 6.

The ozone gas supply device 2 generates high-concentration ozone gas with an ozone concentration of 80% or greater by low-temperature fractional distillation of low-concentration ozone gas, such as ozone gas with an ozone concentration of 20% or less, supplied from the gas introduction line 3, and supplies it to the gas supply line 4.

The ozone gas supply device 2 is provided with a vessel 21, a cold head 22, a refrigerating machine 23, and an insulation section 24.

The vessel 21 introduces low-concentration ozone gas from the gas introduction line 3 and generates liquid ozone or high-concentration ozone gas by low-temperature fractional distillation.

The cold head 22 performs the low-temperature fractional distillation by cooling or heating the vessel 21.

The refrigerating machine 23 controls the cooling or heating of the cold head 22.

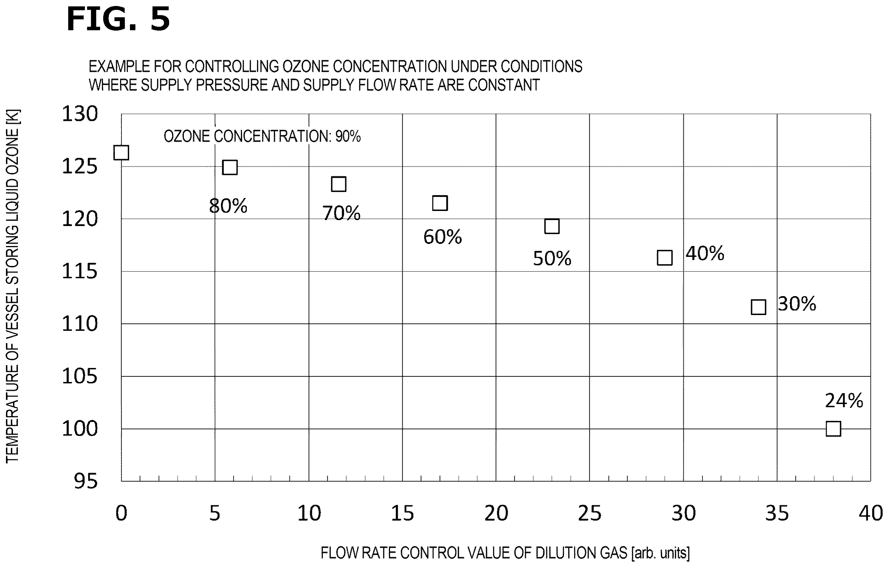

Here, in order to achieve a predetermined ozone concentration and supply pressure (pressure value of pressure gauge PG) of ozone gas, based on the relationship between the dilution gas flow rate of a mass flow controller MFC1, the temperature of the vessel 21, and the ozone concentration inside the vessel 21 shown in FIG. 5, as well as the relationship between the dilution gas flow rate and the pressure of the vessel 21, a control program for controlling the dilution gas flow rate and the temperature of the vessel 21 is mounted in a control unit of the ozone gas supply device 2. In particular, the relationship between the dilution gas flow rate and the pressure of the vessel 21, which is obtained in advance, is effective for calibrating the curve showing the relationship in FIG. 5 (the same applies to an embodiment 2).

Furthermore, by considering the differences in sensitivity (specific heat of the gases, conversion factor) between dilution gas (for example, oxygen gas) and ozone gas in the mass flow controller MFC1, and the exhaust gas velocity of an exhaust pump P0 depending on a king of gas, it is possible to achieve more accurate mixing of the dilution gas and dilution of the ozone concentration of the ozone gas. Specifically, by controlling the operation of the mass flow controller MFC1 via the control unit to adjust the flow rate or the type of dilution gas while maintaining the temperature of the vessel 21 constant, the supply pressure and concentration of the ozone gas can be arbitrarily adjusted.

The insulation section 24 insulates the vessel 21, cold head 22, and refrigerating machine 23. An exhaust pipe 25 is connected to the insulation section 24. The exhaust pipe 25 is equipped with a valve V4 that allows gas to be introduced from the insulation section 24 to the exhaust pump P0.

The gas introduction line 3 has an introduction pipe 30 that introduces low-concentration ozone gas into the vessel 21 of the ozone gas supply device 2. In addition, the introduction pipe 30 allows dilution gas, described below, to be introduced into an ozonator 32 as appropriate.

The introduction pipe 30 is further provided with a regulator 31, an ozonator 32, a mass flow controller MFC1, and a valve V1.

The regulator 31 supplies dilution gas to the introduction pipe 30 at a predetermined pressure range. The dilution gas is one that has a higher vapor pressure than ozone gas and does not react with the ozone gas. Examples of the dilution gas include oxygen gas, nitrogen gas, argon gas, helium gas, or a mixture thereof.

The ozonator 32 generates low-concentration ozone gas, such as ozone gas with an ozone concentration of approximately 20%, using a known ozone generation method such as discharge.
the mass flow controller MFC1 corresponds to a first mass flow controller of the present invention that controls the flow rate of the low-concentration ozone gas supplied from the ozonator 32. In addition, the mass flow controller MFC1 enables the ozone concentration of the ozone gas to be arbitrarily adjusted by changing the flow rate of the dilution gas in the ozone gas supply device 2. A mass flow controller capable of precisely adjusting the flow rate is applied as the mass flow controller MFC1.

The valve V1 enables the introduction of the low-concentration ozone gas from the mass flow controller MFC1 to the ozone gas supply device 2 (vessel 21).

The gas supply line 4 has a supply pipe 40 that supplies ozone gas with a predetermined ozone concentration inside the vessel 21, which is sucked by vacuuming with a supply pump P1, to a process equipment 7. The supply pipe 40 is equipped with a pressure gauge PG and a valve V3. The valve V3 enables the supply of ozone gas from the vessel 21 to the process equipment 7.

The supply pipe 40 between the valve V3 and the process equipment 7 is made of electropolished stainless steel, thereby supplying high-concentration ozone gas with an ozone concentration of 80% or greater to the process equipment 7.

The gas exhaust line 5 has an exhaust pipe 50, which supplies ozone gas sucked by vacuuming from the ozone gas supply device 2 (vessel 21) by the exhaust pump P0 to an ozone destroyer 8. The exhaust pipe 50 is equipped with a valve V2 that enables the introduction of ozone gas from the vessel 21 to the exhaust pump P0. The gas resulting from the decomposition of ozone in the ozone destroyer 8 is supplied to an exhaust system 9.

The bypass line 6 has a bypass pipe 60 that supplies residual gas between the ozonator 32 and the valve V1 to the gas exhaust line 5 immediately before supplying ozone gas from the ozone gas supply device 2 (vessel 21) to the gas supply line 4. The bypass pipe 60 is equipped with a valve V5 that can supply the residual gas to the gas exhaust line 5.

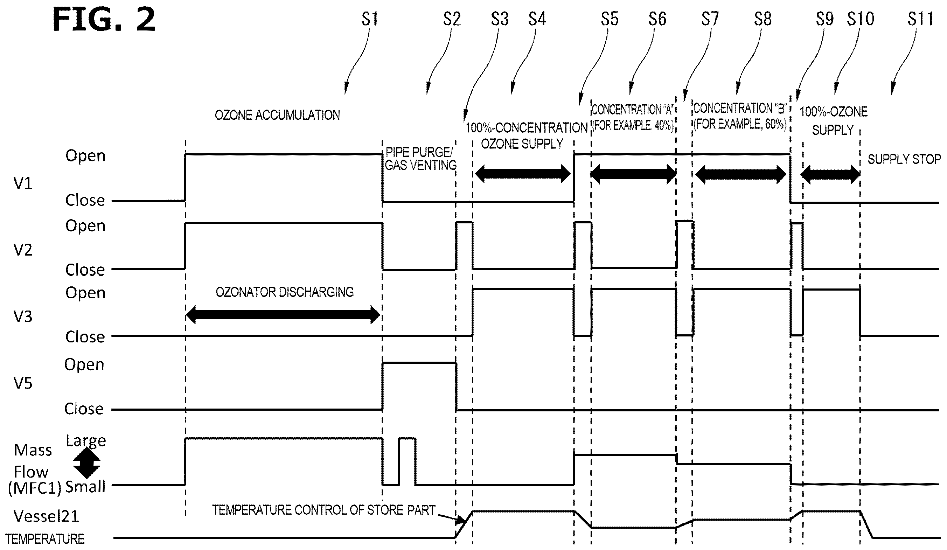

Referring to FIGS. 1 and 2, an example of the operation of an embodiment 1 (S1 to S11) will be explained.

In an ozone concentration accumulation process of S1, the valves V1 and V2 are opened, and the valves V3 and V5 are closed. Oxygen gas (or oxygen gas to which 1% or less of N₂ or Ar is added as a dilution gas to improve ozone generation efficiency) adjusted to have a pressure within a predetermined range by the regulator 31 is supplied to the ozonator 32. The flow rate of the ozone-oxygen mixture gas obtained from the ozonator 32 is adjusted by the mass flow controller MFC1 and it is supplied to the vessel 21. In the inside of the vessel 21, it is maintained at a low temperature (for example, 90 K = -183°C) by the cold head 22 controlled by the refrigerating machine 23, and the ozone component of the ozone-oxygen mixture gas is accumulated as liquid ozone.

After a predetermined amount of the liquid ozone is accumulated in the vessel 21, ozone gas having a predetermined concentration obtained at an arbitrary vapor pressure by controlling the temperature of the vessel 21 in the ozone gas supply process from S3 to S10 described below is supplied to the process equipment 7.

The higher the flow rate or concentration of high-concentration ozone gas, the higher the operating cost of the treatment process (process equipment 7). Therefore, depending on the use, it may be effective to perform the treatment for reducing the ozone concentration of the high-concentration ozone gas while maintaining the same total pressure and flow rate. In this case, the following operation sequence is executed.

For example, in the process from S2 to S11 in FIG. 2, the operation of the valves V1, V2, V3 and V5, mass flow controller MFC1, and vessel 21 are controlled. Specifically, at the point where the ozone concentration of the high-concentration ozone gas is changed, the process of controlling temperature of the liquid ozone section in the vessel 21 (change in pure ozone gas pressure) and the process of introducing dilution gas (oxygen gas) whose flow rate is precisely controlled by the mass flow controller MFC1 are executed simultaneously. In the case of the embodiment 1, the dilution gas is the same gas used for ozone accumulation. In the following, the process from S2 to S11 will be explained.

In a gas purging process of S2, the valves V1 and V2 are closed and the valve V5 is opened before diluting the ozone concentration in the vessel 21. With this, the residual gas in the introduction pipe 30 between the ozonator 32 and the valve V1 is vacuum-exhausted through the bypass line 6 under a pressure of, for example, 10 Pa or less. In addition, the transferring of ozone gas and oxygen gas adsorbed in the introduction pipe 30 due to discharge in the ozonator 32 into the vessel 21 (liquid ozone section) is suppressed, thereby preventing the rapid vaporization of liquid ozone caused by the mixing of the residual gas. Furthermore, the temperature of the dilution gas stabilizes. In addition, since the amount of ozone that vaporizes transiently or steadily varies depending on the temperature and the type (for example, specific heat) of the dilution gas, by presetting the composition and temperature of the dilution gas, the ozone concentration adjusted in the process from S3 to S10 is stabilized.

In a temperature control process of S3, the valve V5 is closed and the valve V2 is opened, and by controlling the temperature of the vessel 21 based on the control program, a target temperature and target pressure of the vessel 21 are controlled such that the ozone concentration of gas in the vessel 21 is approximately 100%.

In the ozone gas supply process of S4, the valve V2 is closed and the valve V3 is opened, and ozone gas with an ozone concentration of approximately 100% is supplied from the vessel 21 controlled to be the target temperature in S3 to the process equipment 7 via the gas supply line 4.

In an ozone concentration control process of S5, the valves V1 and V2 are opened, and the valve V3 is closed, allowing the dilution gas to be introduced into the vessel 21. In addition, by the control based on the set concentration and supply pressure of ozone gas, the flow rate value of the mass flow controller MFC1 and the set temperature of the vessel 21 are adjusted to target values.

In an ozone gas supply process of S6, after it is confirmed that the pressure value of the pressure gauge PG reaches the target pressure (for example, after 1 minute has elapsed), the valve V2 is closed and the valve V3 is opened, and the supply of ozone gas at the target concentration (for example, 40%) to the gas supply line 4 is started.

In a supply gas concentration setting switching process of S7-S10, since changes in the flow rate setting of the dilution gas and the temperature setting of the vessel 21 are accompanied, the valve V3 is closed and the valve V2 is opened during the transient period (for example, 1 minute) until the pressure value of the pressure gauge PG stabilizes (S7, S9). With this, in the process of S8 and S10, the ozone concentration of the gas supplied to the process equipment 7 via the gas supply line 4 is maintained in a state of being stably controlled at an arbitrary target value (for example, 60%, 100%).

In a gas supply stop process of S11, the valves V1, V2, V3, and V5 are closed, thereby stopping the supply of ozone gas from the ozone gas supply device 2.

As described above, according to the ozone gas supply system 1 of the embodiment 1, the concentration of ozone gas supplied to the process equipment 7 can be arbitrarily varied with a minimum amount of piping and valve additions.

In addition, it is possible to change only the ozone partial pressure (ozone flow rate) while keeping the total pressure (total flow rate) of the gas to be supplied constant. In particular, when using ozone gas as an oxidizing source in the MBE (molecular beam epitaxy method) or ALD (atomic layer deposition method), it is possible to vary the ozone concentration (ozone/oxygen gas partial pressure ratio, flow rate ratio) in real time while keeping the gas flow rate or supply pressure constant. Furthermore, it is possible to control the total pressure of the gas containing ozone and the ozone concentration, enabling selection of the process point where the efficacy of ozone gas is maximized. Then, high-purity ozone gas having the purity of 80% or higher, which has high manufacturing costs, can be used under the condition where operating costs are minimized under a process condition where its efficacy is maximized. Furthermore, compatibility with conventional processes using ozone gas is ensured, and ozone gas with a concentration of 80% or greater can be used.

Furthermore, by independently controlling the flow rate of the dilution gas and the temperature of the vessel 21 (vapor pressure of the ozone gas), it is possible to arbitrarily control gas pressure, total gas flow rate, ozone concentration with high reproducibility.

### [Embodiment 2]

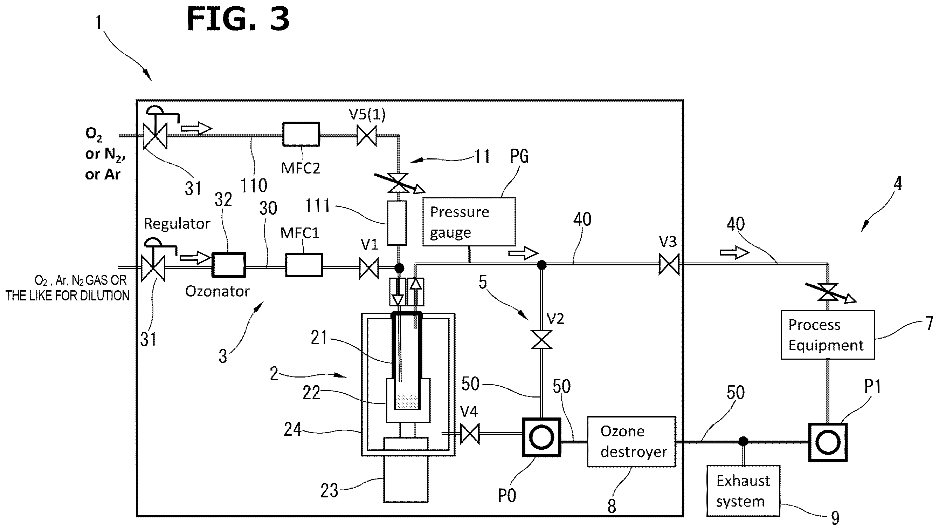

The ozone gas supply system 1 of an embodiment 2 of the present invention shown in FIG. 3 is provided with a dilution gas introduction line 11 that controls the flow rate of dilution gas independently from the gas introduction line 3, in the aspect of the embodiment 1.

The dilution gas introduction line 11 has an introduction pipe 110 that introduces the dilution gas into the introduction pipe 30 of the gas introduction line 3.

The introduction pipe 110 is further provided with a regulator 31, a mass flow controller MFC2, a valve V5(1), and a heat exchanger 111. The valve V5(1) and the heat exchanger 111 are disposed between the mass flow controller MFC2 and the ozone gas supply device 2.

The mass flow controller MFC2 corresponds to a second mass flow controller of the present invention, which is capable of adjusting the ozone concentration of ozone gas in the ozone gas supply device 2 by controlling the flow rate of the dilution gas in the dilution gas introduction line 11.

The dilution gas may be high-purity O₂ gas, Ar gas, N₂ gas, or the like, which has a higher vapor pressure (boiling point) than ozone gas in a low-temperature region (90 K to 130 K) and does not react with ozone gas.

The dilution gas promotes the vaporization of liquid ozone according to the constant-pressure molar specific heat [Cal/K·mol], and the introduction of the dilution gas relatively increases the ozone concentration even when the temperature of the vessel 21 of the ozone gas supply device 2 is constant.

In addition, the low-pressure molar specific heats of O₂, N₂, and Ar are 7.05, 6.92, and 4.99 Cal/K·mol, respectively. Moreover, under the conditions of vessel temperature 100 K and supply pressure 5000 Pa, when performing dilution with O₂ gas and when performing dilution with Ar gas, the ozone concentration after the dilution differs by 5% therebetween (for example, when diluting ozone gas with O₂ gas, the ozone concentration is 24%, and when diluting ozone gas with Ar gas, the ozone concentration is 19%). Therefore, by changing the type of dilution gas, the ozone concentration can be adjusted within a range of 5%. Specifically, similar to the embodiment 1, by controlling the operation of the mass flow controller MFC2 via the control unit to change the flow rate or the type of the dilution gas under the condition that the temperature of the vessel 21 is constant, the supply pressure and concentration of the ozone gas can be arbitrarily adjusted.

Furthermore, the ozone concentration can also be adjusted within a range of several percent by controlling the temperature of the dilution gas. For example, by changing the temperature of the dilution gas from 25°C to 75°C, the ozone concentration in the vessel can be adjusted from 24% to 28%. Specifically, by changing the temperature of the dilution gas through the operation control of the heat exchanger 111 by the control unit, the supply pressure and concentration of the ozone gas can be arbitrarily adjusted.

Furthermore, by supplying the dilution gas to the vessel 21 through the heat exchanger 111 as shown in FIG. 3, the gas temperature inside the vessel 21 can be controlled more stably, the vaporization rate of liquid ozone becomes stable, and the stability of ozone concentration control is improved. In particular, by controlling the gas temperature with high precision (for example, 50 ± 0.5°C), higher precision ozone concentration control can be achieved.

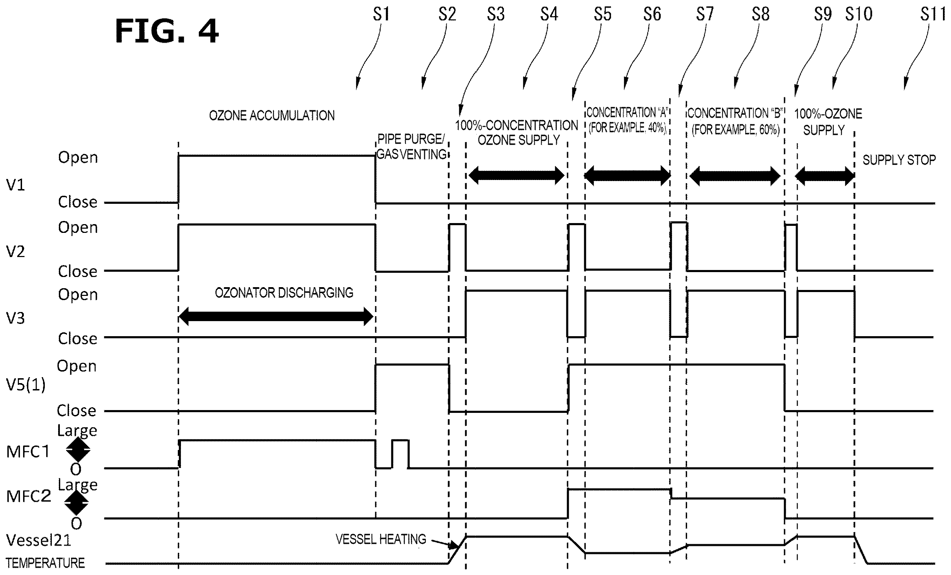

Referring to FIGS. 3-5, an example of the operation of the embodiment 2 will be explained.

The operation schedules of the valves V1-V3, the mass flow controller MFC1, and the vessel 21 in the embodiment 2 are basically the same as those in the embodiment 1.

In particular, in the embodiment 2, during the process of S2 and S5-S8, the valve V5 (1) that is a dilution gas supply valve is opened. In addition, during the process of S5 and S6, the set flow rate of the mass flow controller MFC2 is set based on the relationship between ozone concentration, the flow rate of dilution gas, and the temperature of the vessel 21 shown in FIG. 5. FIG. 5 shows the ozone concentration that can be achieved under conditions where the supply pressure and supply flow rate are constant, the dilution gas is oxygen, and the gas temperature is 25°C. According to the supply pressure (total pressure) of the supply gas and total supply flow rate based on the above-mentioned relationship, the ozone gas within a wide range of ozone concentrations can be realized under constant conditions. The delay time represents the stabilization time for the dilution gas flow rate and the stabilization time for the temperature of the vessel 21, typically ranging from 1 to 3 minutes.

According to the embodiment 2 mentioned above, similar to the embodiment 1, ozone gas can be supplied to the process equipment 7 at a desired ozone concentration and pressure, regardless of the gas flow rate of gas supplied to the process equipment 7 side, gas pressure conditions, and spatial arrangement of a treating furnace. In particular, by providing the dilution gas introduction line 11, the type of dilution gas can be freely selected, and the flow rate of the dilution gas can be independently controlled.

Furthermore, when there is a constraint on the flow rate of the gas supplied to the process equipment 7 of the gas supply line 4 and the distance between the process equipment 7 and the ozone gas supply device 2 is long, it is necessary to supply gas at a certain or higher gas flow rate (flow velocity) to maintain the ozone concentration.

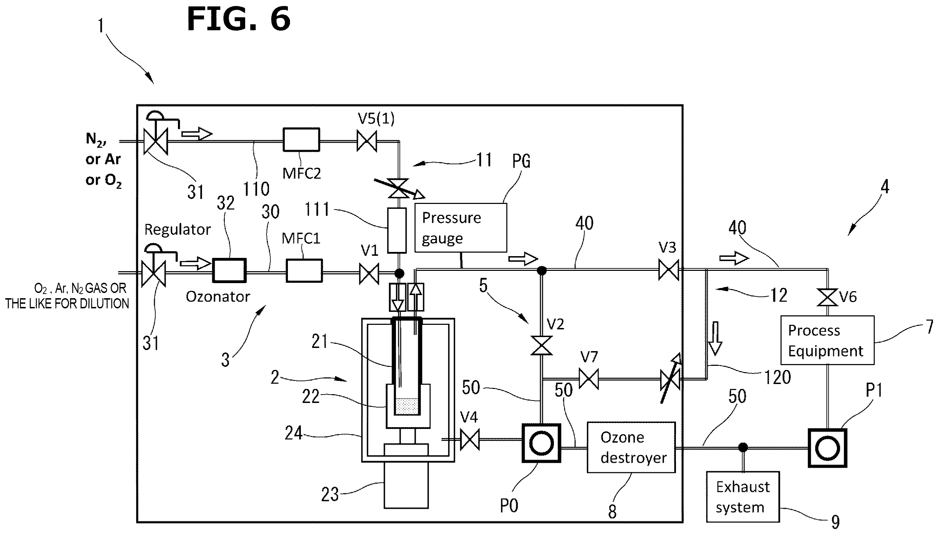

Therefore, the ozone gas supply system 1 of FIG. 6 is further provided with a gas recovery line 12 in the gas supply line 4.

The gas recovery line 12 has a recovery pipe 120 that recovers part of the supply gas from the supply pipe 40 of the gas supply line 4. The recovery pipe 120 is equipped with a valve V7 that can return the recovered supply gas to the exhaust pipe 50 connected to the supply pipe 40 as needed.

According to the configuration shown in FIG. 6, during the transient period accompanying a change in a control target of the ozone concentration, the valve V7 is opened as needed, and the supply gas recovered in the gas recovery line 12 is returned to the gas supply line 4. With this, ozone gas at a correct concentration can be supplied to the process equipment 7. In addition, when the process equipment 7 and the ozone gas supply device 2 are physically separated or when the gas flow rate is low, the supply gas is circulated and supplied to the gas supply line 4 via the gas recovery line 12. Consequently, the decomposition of ozone gas during transportation is suppressed and high-concentration ozone gas can be supplied to the process equipment 7.

### [Embodiment 3]

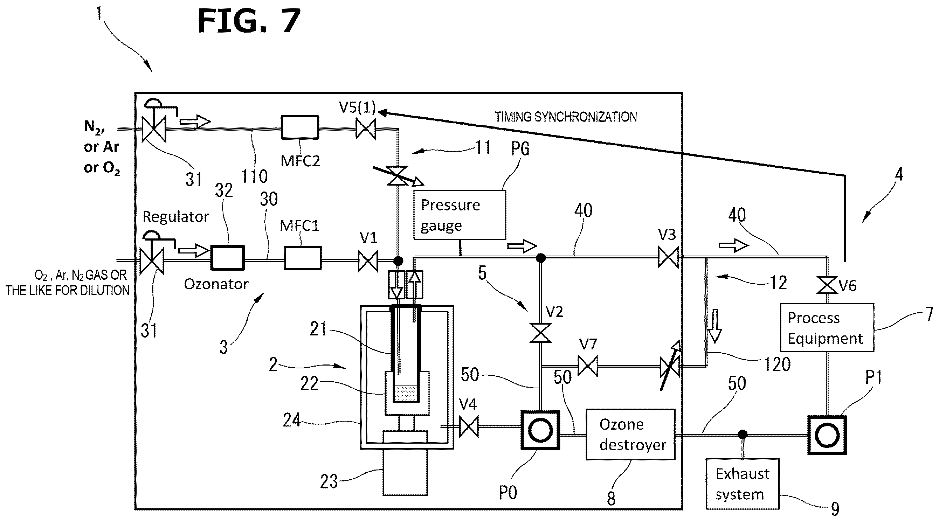

The ozone gas supply system 1 in the embodiment 3 of the present invention shown in FIG. 7 is provided with a valve V6 in the gas supply line 4 of the embodiment 2, which is capable of intermittently supplying ozone gas from the ozone gas supply device 2 to the process equipment 7 in synchronization with the operation of the valve V5(1).

That is, by intermittently and rapidly opening and closing the valve V6 during the supply process of high-concentration ozone gas to the process equipment 7, while maintaining the temperature of the vessel 21 (for example, 125 K), which stores liquid ozone, dilution gas is additionally introduced into the vessel 21 from the dilution gas introduction line 11. With this, the total pressure and ozone partial pressure of the gas supplied to the process equipment 7 increase. Therefore, the transient gas flow rate (speed) becomes larger, and processing performance by ozone introduction can be achieved in a short time. In addition, significant performance improvements (oxidation, washing, film formation) are achieved by the synchronized operation of the valves V5(1) and V6.

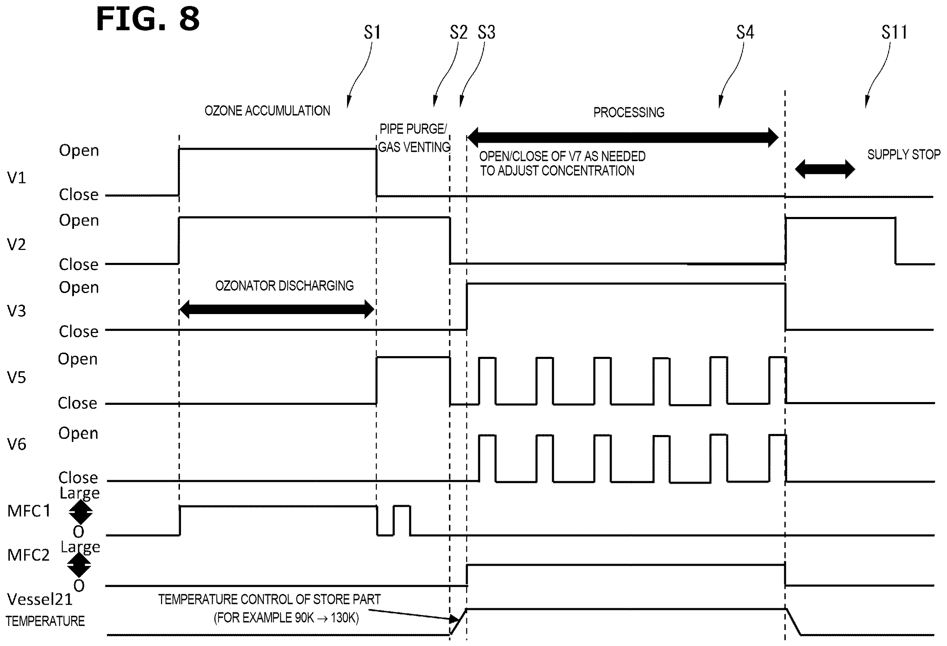

Referring to FIG. 8, an example of the operation of an embodiment 3 will be explained.

The operation schedules of the valves V1-V3 and V5(1), mass flow controller MFC1, and vessel 21 are basically the same as those in the embodiment 2.

In the ozone concentration accumulation process of S1, the required amount of liquid ozone is stored in the vessel 21.

In a gas purging process of S2, the valves V2 and V5(1) are opened, and the value of a constant amount is set by the mass flow controller MFC2 and dilution gas is introduced into the dilution gas introduction line 11 by vacuuming with the exhaust pump P0. As the dilution gas, a gas with a higher vapor pressure (higher boiling point) than ozone gas and a smaller reaction rate constant with ozone gas is preferable. For example, nitrogen gas, argon gas, and oxygen gas are appropriate.

In a temperature control process of S3, the temperature of the vessel 21 is adjusted to the temperature at which a desired ozone partial pressure is achieved (for example, 0.1 atmospheric pressure at 130 K), and the valve V3 is opened. Then, ozone gas is filled into the supply pipe 40 of the gas supply line 4 up to the valve V6 that is an ozone gas supply valve, and the process enters a standby state. At the same time, the mass flow controller MFC2 of the dilution gas introduction line 11 receives a command for a desired dilution gas introduction amount.

In an ozone gas supply process of S4, a signal synchronized with the opening/closing command signal for the valve V6 is output from the process equipment 7 to the valve V5. With this, at the timing when the process equipment 7 requires ozone gas (when valve V6 opens), the valve V5 is opened, and ozone gas is supplied to the process equipment 7 together with the dilution gas.

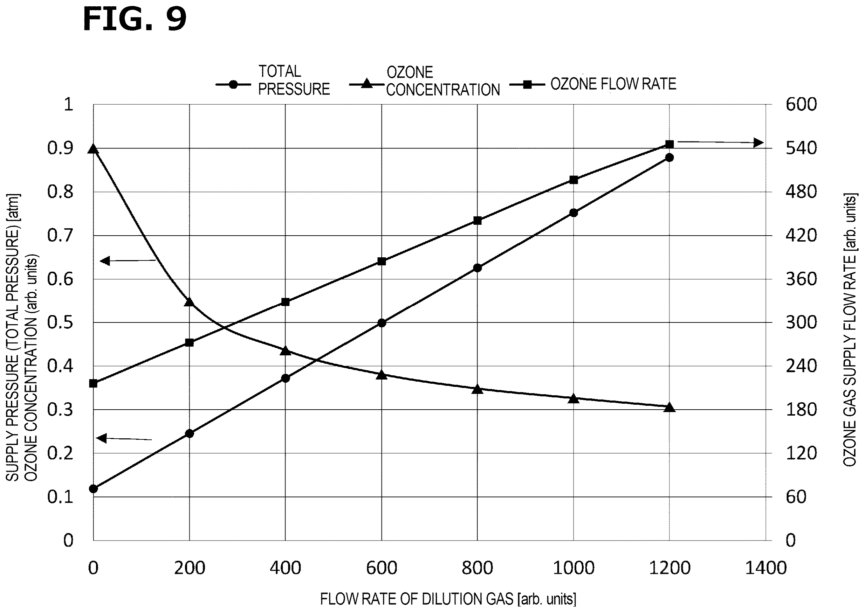

FIG. 9 shows changes in supply pressure, ozone gas concentration, and ozone gas supply flow rate when the flow rate of the dilution gas is increased in the embodiment 3. Although the ozone gas concentration decreases from 90% (vertical axis value 0.9) to a minimum of 30% (vertical axis value 0.3) by the introduction of the dilution gas, the supply pressure (total pressure) increases from 0.1 atmospheric pressure to a maximum of 0.9 atmospheric pressure, and the ozone gas supply flow rate also increases by approximately 2.5 times. That is, under the condition in which the temperature of the vessel 21 is constant, the heat introduced by the dilution gas promotes the vaporization of liquid ozone gas, causing the ozone gas amount to increase rapidly (by 2.5 times in FIG. 9) and the supply pressure to rise (by 9 times in FIG. 9). Furthermore, by the increase in the supply pressure, the supply of high-concentration ozone gas to the processing system (process equipment 7) can be performed in a short time, even when the gas supply line 4 is relatively long (for example, the supply pipe 40 is 10 meters or longer). In particular, this contributes to the high efficiency of the processing treatment (improvement of productivity and ozone utilization efficiency) in systems where the supply time of high-concentration ozone gas is short.

According to the above-mentioned embodiment 3, by separately introducing dilution gas into the vessel 21 maintained at a predetermined control temperature, the vaporization of liquid ozone within the vessel 21 is promoted by the heat quantity of the dilution gas (difference between the gas temperature and the vessel temperature × amount of gas introduced × specific heat). With this, the supply pressure (total pressure) increases instantly. In particular, unlike the embodiments 1 and 2, since the temperature control of the vessel 21 is not required, and it can be effectively applied for processes requiring instantaneous responsiveness, specifically processes requiring intermittently high ozone pressure, such as atomic layer deposition (ALD) processes. In addition, since the total pressure of the supply gas and the ozone gas pressure increase instantly, it can be particularly and effectively applied for the case where an ozone gas supply pipe is long or pressure loss is large (for example, when devices such as valves or filters with low CV values are present).

### [Embodiment 4]

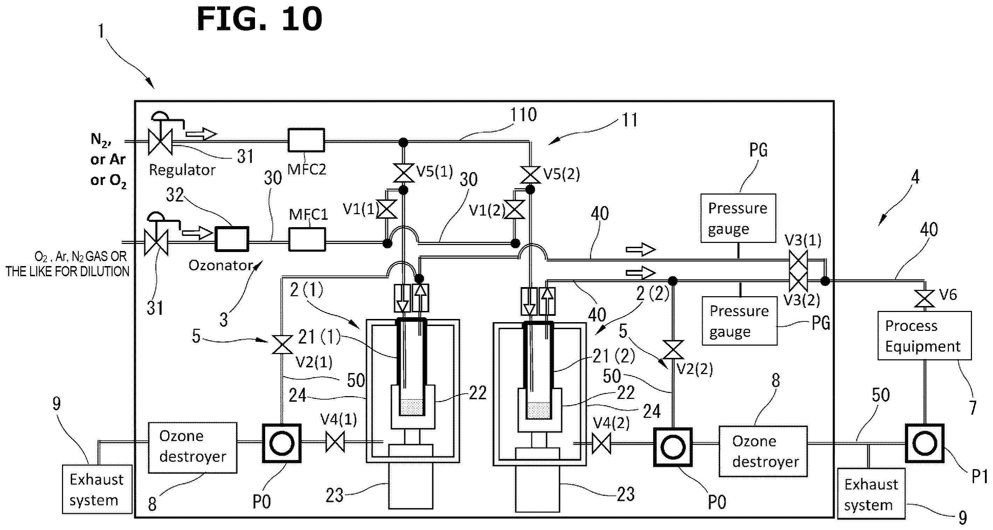

The ozone gas supply system 1 of an embodiment 4 shown in FIG. 10 has the function of the valve control of the embodiments 1 and 2 that can continuously vary the ozone concentration, or the function of the valve control that can be operated in synchronization with the valve V6 in the embodiment 3. With this, it is possible to perform the continuous supply of ozone gas from the ozone gas supply device 2 to the process equipment 7 with variable ozone concentration and variable dilution amount.

The ozone gas supply system 1 has a plurality of ozone gas supply devices 2 for storing liquid ozone, and is equipped with a multi-system gas introduction line 3, gas supply line 4, and gas exhaust line 5 of the embodiments 1 and 2. The ozone gas supply system 1 shown in FIG. 10 has ozone gas supply devices 2(1) and 2(2) as the plurality of the ozone gas supply devices 2, and is equipped with a dual-system gas introduction line 3, gas supply line 4, and gas exhaust line 5.

Valves V1(1), V2(1), V3(1), V4(1), and V5(1) correspond to the ozone gas supply device 2(1), and valves V1(2), V2(2), V3(2), V4(2), and V5(2) correspond to the ozone gas supply device 2(2).

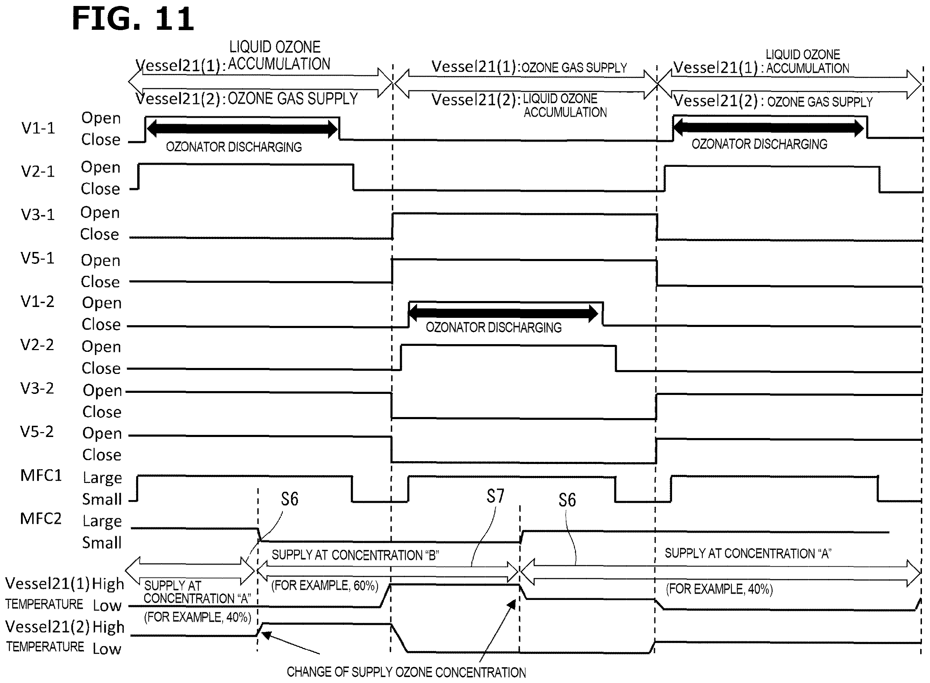

Referring to FIGS. 10 and 11, an example of the operation of an embodiment 4 will be explained.

The operation schedules of the valves, mass flow controllers MFC1 and MFC2, and vessels 21(1) and 21(2) of the ozone gas supply devices 2(1) and 2(2) in the embodiment 4 are basically the same as those in the embodiments 1 and 2.

In particular, for example, while the vessel 21(1) of one of the ozone gas supply device 2(1) accumulates liquid ozone, the vessel 21(2) of the other of the ozone gas supply device 2(2) supplies ozone gas, thereby constantly supplying ozone gas at an arbitrary ozone concentration (for example, 40%, 60%) to the process equipment 7.

Furthermore, the concentration and pressure of the ozone gas to be supplied can be changed at an arbitrary timing by the flow rate control of the mass flow controllers MFC1 and MFC2 and the temperature control of the vessels 21(1) and 21(2) in, for example, the supply gas concentration switching process of S6, S7, S6 in FIG. 11.

According to the above embodiment 4, ozone gas can be supplied continuously for 24 hours, and at the same time, the ozone concentration can be changed and controlled at an arbitrary timing. In addition, continuous supply is possible where only the ozone gas concentration is variable under the condition where the total pressure and total flow rate of the supply gas are constant. Furthermore, similar to the embodiment 3, by synchronizing the valves V5(1) and V5(2) for dilution gas with the valve V6 on the process equipment 7 side, ozone gas can be supplied at high pressure in a discontinuous (pulsed) manner.

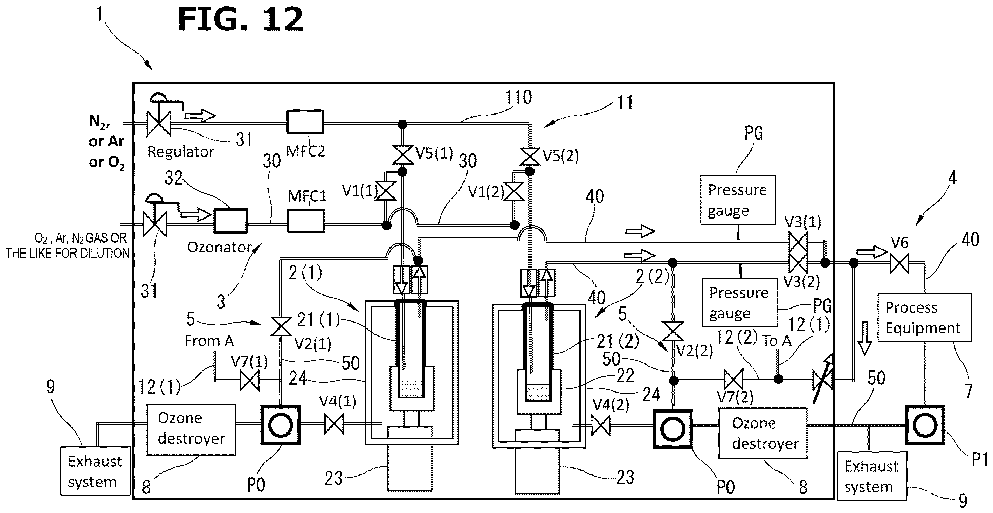

In addition, another aspect of the embodiment 4 shown in FIG. 12 is equipped with gas recovery lines 12(1) and 12(2), similar to another aspect of the embodiment 2 shown in FIG. 6. The gas recovery lines 12(1) and 12(2) correspond to the ozone gas supply devices 2(1) and 2(2), respectively.

The gas recovery line 12(1) has a recovery pipe 120(1) that recovers part of the supply gas from the supply pipe 40 of the gas supply line 4. The recovery pipe 120(1) is equipped with a valve V7(1) that can return the part of the supply gas to the exhaust pipe 50(1) connected to the supply pipe 40 as needed.

The gas recovery line 12(2) has a recovery pipe 120(2) that recovers part of the supply gas from the supply pipe 40 of the gas supply line 4. The recovery pipe 120(2) is equipped with a valve V7(2) that can return the part of the supply gas to the exhaust pipe 50(2) connected to the supply pipe 40 as needed.

According to the configuration shown in FIG. 12, gas from the ozone gas supply devices 2(1) and 2(2) can be supplied to the process equipment 7 under a more flexible ozone gas pressure condition, ozone gas flow condition, and ozone concentration condition.

In particular, while enabling continuous 24-hour ozone gas supply, during transient periods caused by a change in the control target of the ozone concentration, the supply gas is returned to the gas supply line 4 via the gas recovery lines 12(1) and 12(2). With this, ozone gas with accurate concentration can be always supplied to the process equipment 7. In addition, when the process equipment 7 and an ozone supply source are physically separated or when the gas flow rate is low, the supply gas is circulated and supplied to the gas supply line 4 via the gas recovery lines 12(1) and 12(2). Consequently, high-concentration ozone gas can be supplied to the process equipment 7 while suppressing decomposition of the ozone gas during transportation.

## Claims

1. An ozone gas supply system comprising:
an ozone gas supply device that generates ozone gas with an ozone concentration of 80% by volume or greater by low-temperature fractional distillation of ozone gas obtained in an ozonator, and supplies it;
a gas introduction line that introduces the ozone gas from the ozonator to the zone gas supply device such that a dilution gas can be introduced into the ozonator; and
a first mass flow controller that can adjust an ozone concentration of the ozone gas in the ozone gas supply device by controlling a flow rate of the dilution gas of the gas introduction line.

2. The ozone gas supply system according to claim 1, comprising:
a gas supply line that supplies the ozone gas from the ozone gas supply device to a process equipment;
a gas exhaust line that exhausts the ozone gas from the ozone gas supply device; and
a bypass line that can exhaust residual gas of the gas introduction line to the gas exhaust line immediately before supplying the ozone gas from the ozone gas supply device to the gas supply line.

3. The ozone gas supply system according to claim 1, further comprising:
a dilution gas introduction line that can introduce the dilution gas into the gas introduction line; and
a second mass flow controller that can adjust the ozone concentration of the ozone gas in the ozone gas supply device by controlling the flow rate of the dilution gas in the dilution gas introduction line.

4. The ozone gas supply system according to claim 3,
wherein a gas supply line is provided that supplies the ozone gas from the ozone gas supply device to a process equipment,
wherein the dilution gas introduction line is provided with a dilution gas supply valve,
wherein the gas supply line is provided with an ozone gas supply valve, and
wherein the dilution gas supply valve can be opened and closed in synchronization with the ozone gas supply valve.

5. The ozone gas supply system according to claim 1, comprising:
a gas supply line that supplies the ozone gas from the ozone gas supply device to a process equipment; and
a gas recovery line that can return, to the gas supply line, part of the ozone gas to be supplied from the ozone gas supply device to the process equipment.

6. The ozone gas supply system according to claim 1,
wherein a plurality of the ozone gas supply devices are provided, and
wherein while one of the ozone gas supply devices accumulates liquid ozone, an other of the ozone gas supply devices supplies the ozone gas.

7. The ozone gas supply system according to claim 1,
wherein a control unit is provided that is configured to control the flow rate of the dilution gas and a temperature of a vessel of the ozone gas supply device that stores liquid ozone generated by the low-temperature fractional distillation, based on a relationship between the flow rate of the dilution gas, the temperature of the vessel, and the ozone concentration of the ozone gas generated by the low-temperature fractional distillation and a relationship between the flow rate of the dilution gas and a pressure of the vessel.

8. The ozone gas supply system according to claim 7,
wherein the flow rate of the dilution gas and the temperature of the vessel are independently controlled.

9. The ozone gas supply system according to claim 7,
wherein the control unit is configured to control a supply pressure of the ozone gas and the ozone gas concentration of the ozone gas supply device by changing the flow rate or a type of the dilution gas while maintaining the temperature of the vessel constant.

10. The ozone gas supply system according to claim 1,
wherein the dilution gas is a gas that has a higher vapor pressure than the ozone gas and does not react with the ozone gas.

11. The ozone gas supply system according to claim 5,
wherein a gas exhaust line that exhausts the ozone gas from the ozone gas supply device is provided, and
wherein the gas recovery line can supply the part of the ozone gas to be supplied to the processing equipment to the gas exhaust line connected to the gas supply line.

12. The ozone gas supply system according to claim 3,
wherein the dilution gas introduction line introduces the dilution gas to the gas introduction line through a heat exchanger.

13. The ozone gas supply system according to claim 12,
wherein the heat exchanger controls a supply pressure of the ozone gas and the ozone gas concentration by changing a temperature of the dilution gas.

## Amended claims

### Amended claims under Art. 19.1 PCT

2. An ozone gas supply system comprising:
an ozone gas supply device that generates ozone gas with an ozone concentration of 80% by volume or greater by low-temperature fractional distillation of ozone gas obtained in an ozonator, and supplies it;
a gas introduction line that introduces the ozone gas from the ozonator to the zone gas supply device such that a dilution gas can be introduced into the ozonator;
a gas supply line that supplies the ozone gas from the ozone gas supply device to a process equipment;
a gas exhaust line that exhausts the ozone gas from the ozone gas supply device;
a bypass line that can exhaust residual gas of the gas introduction line to the gas exhaust line immediately before supplying the ozone gas from the ozone gas supply device to the gas supply line;
a first mass flow controller that can adjust an ozone concentration of the ozone gas in the ozone gas supply device by controlling a flow rate of the dilution gas of the gas introduction line; and
a control unit configured to control the flow rate of the dilution gas and a temperature of a vessel of the ozone gas supply device that stores liquid ozone generated by the low-temperature fractional distillation, based on a relationship between the flow rate of the dilution gas detected by the first mass flow controller, the temperature of the vessel, and the ozone concentration of the ozone gas generated by the low-temperature fractional distillation and a relationship between the flow rate of the dilution gas and a pressure of the vessel.

3. The ozone gas supply system according to claim 2, further comprising:
a dilution gas introduction line that can introduce the dilution gas into the gas introduction line; and
a second mass flow controller that can adjust the ozone concentration of the ozone gas in the ozone gas supply device by controlling the flow rate of the dilution gas in the dilution gas introduction line.

4. The ozone gas supply system according to claim 3,
wherein a gas supply line is provided that supplies the ozone gas from the ozone gas supply device to a process equipment,
wherein the dilution gas introduction line is provided with a dilution gas supply valve,
wherein the gas supply line is provided with an ozone gas supply valve, and
wherein the dilution gas supply valve can be opened and closed in synchronization with the ozone gas supply valve.

5. An ozone gas supply system comprising:
an ozone gas supply device that generates ozone gas with an ozone concentration of 80% by volume or greater by low-temperature fractional distillation of ozone gas obtained in an ozonator, and supplies it;
a gas introduction line that introduces the ozone gas from the ozonator to the zone gas supply device such that a dilution gas can be introduced into the ozonator;
a gas supply line that supplies the ozone gas from the ozone gas supply device to a process equipment;
a gas recovery line that can return, to the gas supply line, part of the ozone gas to be supplied from the ozone gas supply device to the process equipment;
a first mass flow controller that can adjust an ozone concentration of the ozone gas in the ozone gas supply device by controlling a flow rate of the dilution gas of the gas introduction line; and
a control unit configured to control the flow rate of the dilution gas and a temperature of a vessel of the ozone gas supply device that stores liquid ozone generated by the low-temperature fractional distillation, based on a relationship between the flow rate of the dilution gas detected by the first mass flow controller, the temperature of the vessel, and the ozone concentration of the ozone gas generated by the low-temperature fractional distillation and a relationship between the flow rate of the dilution gas and a pressure of the vessel.

6. An ozone gas supply system comprising:
an ozone gas supply device that generates ozone gas with an ozone concentration of 80% by volume or greater by low-temperature fractional distillation of ozone gas obtained in an ozonator, and supplies it;
a gas introduction line that introduces the ozone gas from the ozonator to the zone gas supply device such that a dilution gas can be introduced into the ozonator;
a first mass flow controller that can adjust an ozone concentration of the ozone gas in the ozone gas supply device by controlling a flow rate of the dilution gas of the gas introduction line; and
a control unit configured to control the flow rate of the dilution gas and a temperature of a vessel of the ozone gas supply device that stores liquid ozone generated by the low-temperature fractional distillation, based on a relationship between the flow rate of the dilution gas detected by the first mass flow controller, the temperature of the vessel, and the ozone concentration of the ozone gas generated by the low-temperature fractional distillation and a relationship between the flow rate of the dilution gas and a pressure of the vessel,
wherein a plurality of the ozone gas supply devices are provided, and
wherein while one of the ozone gas supply devices accumulates the liquid ozone, an other of the ozone gas supply devices supplies the ozone gas.

8. The ozone gas supply system according to any of claims 2, 5 and 6,
wherein the flow rate of the dilution gas and the temperature of the vessel are independently controlled.

9. The ozone gas supply system according to any of claims 2, 5 and 6,
wherein the control unit is configured to control a supply pressure of the ozone gas and the ozone gas concentration of the ozone gas supply device by changing the flow rate or a type of the dilution gas while maintaining the temperature of the vessel constant.

10. The ozone gas supply system according to any of claims 2, 5 and 6,
wherein the dilution gas is a gas that has a higher vapor pressure than the ozone gas and does not react with the ozone gas.

11. The ozone gas supply system according to claim 5,
wherein a gas exhaust line that exhausts the ozone gas from the ozone gas supply device is provided, and
wherein the gas recovery line can supply the part of the ozone gas to be supplied to the processing equipment to the gas exhaust line connected to the gas supply line.

12. The ozone gas supply system according to claim 3,
wherein the dilution gas introduction line introduces the dilution gas to the gas introduction line through a heat exchanger.

13. The ozone gas supply system according to claim 12,
wherein the heat exchanger controls a supply pressure of the ozone gas and the ozone gas concentration by changing a temperature of the dilution gas.
